# EUROPÄISCHE PATENTANMELDUNG

(11) **EP 4 702 848 A1**
(43) Veröffentlichungstag der Anmeldung: **04.03.2026**
(21) Anmeldenummer: 25195894.8
(22) Anmeldetag: 14.08.2025
(51) Int. Cl.: A23K 20/163, A23K 40/10

(54) **GRANULAT, VERFAHREN ZUR HERSTELLUNG DES GRANULATS UND FUTTERMISCHUNG**

(30) Priorität: 03.09.2024 DE 102024002836
(71) Anmelder: J. Rettenmaier & Söhne GmbH + Co. KG, 73494 Rosenberg (DE)
(72) Erfinder: Nagel, Andreas, 73479 Ellwangen (DE)
(74) Vertreter: Dr. Weitzel & Partner

(57) **Zusammenfassung**

Die Erfindung betrifft ein Granulat, dessen Granulatpartikel cellulosehaltige Fasern umfassen.

Das erfindungsgemäße Granulat ist dadurch gekennzeichnet, dass die Granulatpartikel dazu in der Lage sind, zumindest ihr Eigengewicht an einer flüssigen Substanz bei gleichzeitiger Bewahrung der Rieselfähigkeit aufzunehmen.

## Beschreibung

Die Erfindung betrifft ein Granulat, dessen Granulatpartikel cellulosehaltige Fasern umfassen, ein Verfahren zur Herstellung des Granulats sowie eine Futtermischung für Tiere.

Aus verschiedenen Gründen werden im Bereich der Nutztieraufzucht flüssige Additive im Mischfutter eingesetzt, beispielsweise um die im Futter enthaltenen Kalorien zu erhöhen oder, um den Tieren wichtige Nährstoffe wie Fettsäuren, fettlösliche Vitamine oder Aminosäuren zuzuführen. Zusätzlich besitzen viele flüssige Futterbestandteile einen positiven Effekt auf die Entwicklung von Darmbakterien.

Um diese flüssigen Bestandteile besser transportieren, dosieren, handhaben und ins Mischfutter einarbeiten zu können, werden sie üblicherweise auf ein festes Trägermaterial aufgebracht. Dieses Trägermaterial wird dem Mischfutter untergearbeitet.

Das Trägermaterial muss in der Lage sein, ausreichende Mengen an Flüssigkeit binden zu können. Im beladenen Zustand muss es frei fließfähig sein. Die Flüssigkeit muss möglichst komplett im Verdauungstrakt des Tieres wieder freigegeben werden. Auch unter Druckbelastung oder erhöhter Temperatur darf die Flüssigkeit nicht aus dem Trägermaterial austreten. Das Trägermaterial muss dem Futter untergemischt werden können, ohne dass später eine Separation auftritt. Die Inhaltsstoffe des Trägermaterials müssen für den Einsatz in Futtermitteln zugelassen sein.

Wenn es um die Bindung von flüssigen Zusatzstoffen im Futtermittelbereich geht, sind derzeit anorganische Substanzen wie Kieselgur und andere Silikate die erste Wahl. Die Silikate besitzen eine Partikelgröße von ungefähr 100 µm und eine DOA Adsorption nach ISO 19246:2016 von ungefähr 2,4 ml/g.

Der Einsatz dieser Produkte wird jedoch zunehmend kritisch gesehen. Durch die Förderung von chronischen Lungenerkrankungen stellt kristallines SiO₂ ein Gesundheitsrisiko dar. Zudem wird Siliziumdioxid im Lebensmittelbereich ab 2025 als Nanomaterial eingestuft. Für den Futtermittelbereich wird eine solche Einstufung ebenfalls erwartet.

Als organische Alternative wird derzeit Pflanzenkohle oder Maisspindelgranulat verwendet. Diese beiden Optionen bieten jedoch ein deutlich geringeres Ölbindevermögen im Vergleich zu den anorganischen Varianten. Handelsübliche Holz- oder Cellulosefasern weisen ein hohes Öl- bzw. Wasserbindevermögen auf, sind aber im beladenen Zustand nicht mehr fließfähig bzw. rieselfähig.

Eine Studie, die den Einfluss eines organischen Trägermaterials in der Nutztierzucht auf die Darmgesundheit der zu fütternden Tiere untersucht, findet sich in: Florian Quinger, Julia Kern, Astrid Bosse, Jana Seifert, Markus Rodehutscord, Wolfgang Siegert, Effects of carriers for oils in compound feeds on growth performance, nutrient digestibility, and gut microbiota in broiler chickens, Poultry Science, Volume 103, Issue 7, 2024, 103803, ISSN 0032-5791, https://doi.org/10.1016/j.psj.2024.103803.

Biologisch abbaubare Kugeln sind ferner aus der WO 2021/104728 A1 bekannt. Die biologisch abbaubaren Kugeln weisen eine sphärische Gestalt mit einem Durchmesser im Bereich von 1 bis 5000 µm auf. Die Kugeln enthalten amorphe Cellulose mit einem Gewichtsanteil von 1 bis 80% sowie zumindest 20 Gew.-% einer kosmetischen Zutat mit einem molekularen Gewicht von mehr als 50 g/mol. Ferner zeichnen sich die Kugeln durch einen Wasseranteil von weniger als 10 Gew.-% des Gewichts der Kugeln aus. Als kosmetische Zutat können den Kugeln insbesondere Öle, Vitamine, Enzyme, Carotinoide, biogen aktive Substanzen und dergleichen beigesetzt sein. Die entsprechend beladenen Kugeln können zur Herstellung kosmetischer Zusammensetzungen genutzt werden. Insbesondere werden die Kugeln als Peelingmittel verwendet. Das Verfahren zur Herstellung der Kugeln ist jedoch technisch aufwändig.

Ferner offenbart die DE 100 07 566 A1 einen absorbierenden Artikel. Der absorbierende Artikel umfasst zumindest teilweise als Granulat vorliegende Cellulosefasern. Das Granulat kann in einem Saugkörper angeordnet sein, welcher sich zwischen einer flüssigkeitsdurchlässigen Deckschicht und einer flüssigkeitsundurchlässigen Rückschicht befindet. Somit bildet der absorbierende Artikel einen Hygieneartikel wie eine Damenbinde oder eine Windel aus. Das Granulat ist rieselfähig, auch im mit Flüssigkeit beladenen Zustand. Das Granulat kann durch mechanisches Mahlen von Cellulose oder Aufwickeln bzw. Koagulation von Cellulosefasern in einer feuchten Atmosphäre hergestellt werden.

Der vorliegenden Erfindung liegt die Aufgabe zugrunde ein verbessertes Granulat anzugeben, welches sich zur Beimischung in tierische Futtermischungen eignet, dabei eine herausragende Aufnahmekapazität für flüssige Additive bei gleichzeitiger Erhaltung der Rieselfähigkeit aufweist und dabei einfach und kostengünstig herzustellen ist. Eine weitere Aufgabe der Erfindung ist es ein Verfahren zur Herstellung eines solchen Granulats anzugeben.

Erfindungsgemäß werden diesen Aufgaben gelöst durch ein Granulat mit den Merkmalen des Anspruchs 1 sowie ein Verfahren zu dessen Herstellung mit den Merkmalen des Anspruchs 12. Vorteilhafte Ausgestaltungen und Weiterbildungen sowie eine Futtermischung für Tiere, umfassend ein solches Granulat, ergeben sich aus den hiervon abhängigen Ansprüchen.

Ein gattungsgemäßes Granulat, dessen Granulatpartikel cellulosehaltige Fasern umfassen, sieht vor, dass die Granulatpartikel dazu in der Lage sind, zumindest ihr Eigengewicht an einer flüssigen Substanz bei gleichzeitiger Bewahrung der Rieselfähigkeit aufzunehmen. Zur Bewertung, ob dabei die Rieselfähigkeit bewahrt wird oder nicht, dient die Ermittlung der sogenannten Schüttkegelhöhe.

Über einen Metallvollzylinder mit einem Durchmesser von 60 mm und einer Höhe von 55 mm wird dabei in einem Abstand von 150 mm ein Sieb mit einem Durchmesser von 60 mm zentral angeordnet. Die Maschenweite des Siebbodens beträgt 3 mm, wenn das zu prüfende Ausgangsmaterial eine Partikelgröße aufweist, die geringer als 3 mm ist. Ist die Partikelgröße hingegen größer als 3 mm, so wird ein Siebboden mit einer Maschenweite von 9 mm verwendet. Das zu prüfende Material, hier also besagtes Granulat, wird auf das Sieb gegeben und mit Hilfe eines Pinsels langsam und möglichst gleichmäßig durch das Sieb gerührt. Es wird so lange Material durch das Sieb gerührt, bis sich auf dem Zylinder ein geometrisch gleichmäßig geformter Schüttkegel gebildet hat, welcher sich auch nach weiterer Materialzugabe nicht mehr in seiner Höhe verändert. Die Höhe dieses Schüttkegels wird anschließend in Millimetern gemessen. Je kleiner die Schüttkegelhöhe ausfällt, desto rieselfähiger ist das Material. Erfindungsgemäß gilt dabei das Material als sehr gut rieselfähig, wenn die Schüttkegelhöhe kleiner als 20 mm ausfällt. Im Bereich von 20 bis 30 mm ist das Material gut rieselfähig. Im Bereich von 30 bis 35 mm ist das Material mäßig rieselfähig. Sollte die Schüttkegelhöhe größer ausfallen als 35,0 mm, so gilt das geprüfte Material als nicht mehr rieselfähig, hat also seine Rieselfähigkeit verloren.

Die Granulatpartikel umfassen cellulosehaltige Fasern. Diese cellulosehaltigen Fasern können künstlich hergestellt werden oder auch aus Naturprodukten gewonnen werden. Es kann sich um reine Cellulosefasern handeln oder aber um Fasern, die Cellulose und/oder Cellulosefasern enthalten. Besonders bevorzugt handelt es sich bei den cellulosehaltigen Fasern um Pflanzenfasern. Beispielsweise kann es sich um Holzfasern, Fasern aus Einjahrespflanzen wie Stroh, Getreidespelzen und dergleichen sowie Fasern von Mehrjahrespflanzen wie Baumwolle, Kapok und dergleichen handeln. Bei Pflanzenfasern handelt es sich um natürliche Produkte, von denen somit ausgegangen werden kann, dass diese ohne Gefahr durch Lebewesen wie Tiere konsumiert werden können. Pflanzenfasern zeichnen sich somit durch ihre Tauglichkeit als Mischfutteradditiv aus.

Das erfindungsgemäße Granulat ist dazu in der Lage zumindest sein Eigengewicht an einer flüssigen Substanz aufzunehmen und dabei rieselfähig, bzw. fließfähig zu bleiben. Dies bedeutet, dass 100 g des unbeladenen Granulats zumindest 100 g an flüssiger Substanz aufnehmen können, wobei der nach obigem Messverfahren bestimmte Schüttkegel kleiner als 35 mm bleibt. Dies erlaubt einen Transport des Granulats auch im beladenen Zustand mittels pneumatischer Fördersysteme, Bandfördersysteme, Schneckenfördersysteme und dergleichen.

Gemäß einer vorteilhaften Weiterbildung des erfindungsgemäßen Granulats weist dieses eine Schüttdichte von 120,0 bis 300,0 g/l, bevorzugt 140,0 bis 250,0 g/l und besonders bevorzugt von 160,0 bis 220,0 g/l auf, wobei die Schüttdichte insbesondere nach folgendem Messverfahren bestimmt ist:
- Bereitstellen einer zylindrischen Messröhre mit einem Innendurchmesser von 30,0 mm und einer Zylinderhöhe von 141,5 mm;
- Aufsetzen eines Siebbodens mit einer Maschenweite von 3,0 mm auf die Messröhre;
- Aufsetzen eines Trichters auf den Siebboden und Befüllen des Trichters mit dem Granulat;
- Durchstreichen des Granulats durch den Siebboden so lange, bis die Messröhre bis obenhin gefüllt ist;
- Abnehmen des Trichters und des Siebbodens und Abstreifen etwaigen überstehenden Granulats vom oberen Rand der Messröhre; und
- Wiegen der befüllten Messröhre und Abziehen des Eigengewichts der Messröhre vom Ergebnis.

Die Schüttdichte, oftmals auch als Schüttgewicht bezeichnet, gattungsgemäßer Granulate ist im Vergleich höher. Das erfindungsgemäße Granulat zeichnet sich somit durch eine besonders geringe Schüttdichte aus, was wesentlich zur gesteigerten Aufnahmekapazität besagter flüssigen Substanzen bei gleichzeitiger Erhaltung der Rieselfähigkeit beiträgt.

Eine solche geringe Schüttdichte lässt sich dadurch erzielen, dass die cellulosehaltigen Fasern in den Granulatpartikeln weitmaschig zueinander gepackt sind. Hierdurch werden Kapillaren zwischen den cellulosehaltigen Fasern gebildet, die zur Reduktion der Schüttdichte beitragen. In den durch die Kapillaren gebildeten Hohlräumen lässt sich besagte flüssige Substanz aufnehmen. Dabei stellt sich die Frage für den Fachmann, wie Granulatpartikel, umfassend cellulosehaltige Fasern, hergestellt werden können, die eine solche Kapillarstruktur aufweisen. Hierauf wird im späteren Verlauf noch näher eingegangen.

Vorteilhaftweise wird dabei der Messvorgang mehrmals, beispielsweise 2 bis 3 mal, wiederholt und ein Mittelwert aus den Einzelergebnissen gebildet. Dies sorgt für besonders aussagekräftige Ergebnisse. Die Messröhre weist ein Innenvolumen beziehungsweise Messvolumen von 100 cm³ auf. Das in Gramm ermittelte Waagergebnis kann dann mit dem Faktor 10 multipliziert werden, sodass die Schüttdichte in g/l ermittelt wird.

Entsprechend einer weiteren vorteilhaften Ausgestaltung des erfindungsgemäßen Granulats weisen die die Granulatpartikel eine spezifische Oberfläche von 0,5 bis 1,0 m²/g auf, bevorzugt 0,6 bis 0,8 m²/g, wobei die spezifische Oberfläche insbesondere mittels Gasadsorption mit folgendem Messgerät bestimmt ist: Gasadsorptionsmessgeräts BET-NOVA 2000e der Firma Quantachrome Instruments, Inc. Das erfindungsgemäße Granulat zeichnet sich somit durch Granulatpartikel aus, die eine gegenüber dem Stand der Technik besonders hohe spezifische Oberfläche aufweisen. Diese große spezifische Oberfläche resultiert, wie im Zusammenhang mit der Schüttdichte bereits erläutert, durch den locker gepackten Aufbau der Granulatpartikel. Durch das Umfassen besagter Kapillaren nimmt dabei der Oberflächenanteil innerhalb der Granulatpartikel zu, was entsprechend zu einer Zunahme der spezifischen Oberfläche führt. Somit steht auch mehr Oberfläche zur Benetzung der cellulosehaltigen Fasern mit der von den Granulatpartikeln aufzunehmenden flüssigen Substanz zur Verfügung. Dies trägt zur Erhöhung der Aufnahmekapazität für die flüssige Substanz bei gleichzeitiger Wahrung der Fließfähigkeit bzw. Rieselfähigkeit bei.

Zum Durchführen der Messung mit dem Gasadsorptionsmessgerät BET-NOVA 2000e sind zuerst einige Vorbereitungen durchzuführen. So sind die Vakuumpumpe und das BET-Gerät selbst einzuschalten. Wird die Vakuumpumpe zuerst eingeschaltet, so wird verhindert, dass Öldämpfe in das Gerät gelangen. Anschließend heizt das BET-Gerät auf Betriebstemperatur auf. Anschließend wird die Messzelle mittels Analysewaage im leeren Zustand gewogen und das Gewicht notiert. Anschließend wird die zu untersuchende Probe mit Hilfe eines Trichters eingefüllt. Dabei sollte bei der Messzelle die untere Kugel zu ungefähr drei Viertel mit der Probe befüllt sein. Empfehlenswert ist eine Einwaage, die zu einer absoluten Oberfläche in der Messzelle im Bereich von 1,5 bis 2,0 m² führt. Der Trichter ist nach jeder Probenbefüllung mit Luftdruck zu reinigen. Alle Proben sind vor dem Durchführen der Messung zu entgasen. Anschließend wird der Ausheizvorgang gestartet. Dabei werden alle unerwünschten adsorbierten Gase und Dämpfe von der Porenoberfläche entfernt. Damit ist die Probe vorbereitet. Nun werden die Messzellen erneut mittels Analysewaage ausgewogen und das Ergebnis notiert. Anschließend startet der eigentliche Messvorgang. Der Messvorgang wird von dem BET-Gerät automatisch durchgeführt. Aus der Gewichtsdifferenz zur entgasten Probe kann dann auf die Menge des adsorbierten Gases geschlossen werden, welches wiederum ein Maß für die spezifische Oberfläche ist. Diese Ergebnisse werden vom BET-Berät automatisch berechnet.

Eine weitere vorteilhafte Ausgestaltung des erfindungsgemäßen Granulats sieht ferner vor, dass die Granulatpartikel mit wenigstens einer flüssigen Substanz beladen sind. Somit wird nicht nur das Granulat als solches beansprucht, also ein entsprechendes "Trägermaterial", sondern auch das fertige "Produkt". So dient das Trägermaterial zum Tragen der flüssigen Substanz. Je nach Einsatzzweck können verschiedene flüssige Substanzen verwendet werden. So kann das erfindungsgemäße Granulat nicht nur als Futtermittel verwendet werden, sondern auch für industrielle Anwendungen eingesetzt werden, wie beispielsweise als Ölbindemittel. Dank der speziellen Eigenschaften des erfindungsgemäßen Granulats können dabei vergleichsweise große Flüssigkeitsmengen aufgenommen werden, wobei das beladene Granulat dank des Wahrens der Rieselfähigkeit weiterhin gut verarbeitbar ist.

Bevorzugt weist dabei die flüssige Substanz einen auf das Gewicht der Substanz bezogenen Wasseranteil von weniger als 15,0% auf. Bei der Substanz kann es sich somit um sogenannte ölige Substanzen oder "wasserfreie" Substanzen handeln.

Besonders bevorzugt ist die flüssige Substanz durch ein flüssiges Mischfutteradditiv ausgebildet, insbesondere in Form von: Ölen, Säuren, Fettsäuren, Vitaminen, Aminosäuren oder Alkoholen. Das unbeladene Granulat kann somit als Trägerstoff für entsprechende Mischfutteradditive genutzt werden. Ein mit einer solchen flüssigen Substanz beladenes Granulat kann dann als Beigabe für Futtermischungen verwendet werden. Durch die hohe Aufnahmekapazität lässt sich erreichen, dass mittels des Granulats zu fütternde Tiere nur vergleichsweise wenig Granulatpartikel beziehungsweise cellulosehaltige Fasern, konsumieren müssen, um eine festgelegte Menge des flüssigen Mischfutteradditivs aufzunehmen. Dabei bleibt, wie bereits mehrfach beschrieben, die Rieselfähigkeit des Granulats erhalten, sodass das Granulat leicht verarbeitet werden und dosiert werden kann. Das erfindungsgemäße Granulat zeichnet sich dabei auch dadurch aus, dass die aufgenommene flüssige Substanz nahezu komplett und leicht im Verdauungstrakt des gefütterten Tieres wieder freigegeben wird. Auch unter Druckbelastung und erhöhter Temperatur tritt die flüssige Substanz nicht aus den Granulatpartikeln aus. Hierdurch lässt sich verhindern, dass ein matschiger Brei am Boden eines entsprechenden Futtermittelsacks entsteht. Das Granulat weist zudem eine geringe Staubungsneigung auf. Das Granulat lässt sich mit weiteren Futterbestandteilen mischen, ohne das eine Separation auftritt. Cellulosehaltige Fasern sind für den Einsatz in Futtermitteln zugelassen. Das erfindungsgemäße Granulat ist dazu in der Lage, die unterschiedlichsten flüssigen Mischfutteradditive zu tragen, sodass das erfindungsgemäße Granulat breit eingesetzt werden kann. Dabei ist es auch denkbar verschiedene flüssige Mischfutteradditive gemeinsam in das Granulat einzubringen. Hierzu können unterschiedliche flüssige Mischfutteradditive nach und nach hinzugegeben werden oder auch in vorher vermischter Form.

Das Beladen des Granulats mit der flüssigen Substanz kann beispielsweise durch Tränken des Granulats mit der flüssigen Substanz oder Besprühen des Granulats mit der flüssigen Substanz erfolgen. Zum Tränken kann das Granulat mit der flüssigen Substanz in einem Mischbottich miteinander verrührt werden. Auch kann das Granulat in eine Pfütze der flüssigen Substanz geworfen werden und sich dann mit der flüssigen Substanz dank der Kapillarkräfte vollsaugen. Anschließend kann das beladene Granulat aufgekehrt werden.

Beispielsweise kommen folgende Stoffe zum Beladen der Granulatpartikel in Frage: Öle wie Sonnenblumenöl, Rapsöl, Distelöl, Kokosnussöl, Erdnussöl, Olivenöl, ätherische Öle sowie Alkohole wie Glyzerin, Propylenglykol und organische Säuren wie Propionsäure.

Entsprechend einer weiteren vorteilhaften Ausgestaltung des erfindungsgemäßen Granulats ist es ferner vorgesehen, dass die cellulosehaltigen Fasern eine durchschnittliche Faserlänge zwischen 30 µm bis 3,0 mm aufweisen, bevorzugt zwischen 30 µm und 400 µm, besonders bevorzugt zwischen 30 µm und 150 µm. Die cellulosehaltigen Fasern liegen innerhalb der Granulatpartikel aufeinander auf. Hierdurch entstehen besagte Hohlräume bzw. Einschlüsse. Diese Hohlräume dienen dazu die flüssige Substanz aufzunehmen und zu tragen. Die Hohlräume sind dabei so klein, dass Kapillareffekte auftreten. Die flüssige Substanz wird hierdurch bei einem Kontakt mit den Granulatpartikeln in das Innere des Granulats gezogen. Dies verbessert nicht nur die Aufnahmekapazität, sondern auch die Aufnahmegeschwindigkeit für die flüssige Substanz. Je feinere und dünnere Fasern dabei verwendet werden, desto geringer ist auch die Porengröße beziehungsweise Hohlraumgröße. Somit lassen sich stärkere Kapillareffekte nutzen. Durch das Verwenden besonders feiner, kurzer und einheitlicher Fasern wird auch die Rundheit der Granulatpartikel erhöht, wodurch ihre Stabilität und Fließfähigkeit weiter verbessert wird. Über eine Variation der Faserlänge und des Faserdurchmessers lässt sich auch die Größenverteilung der Granulatpartikel beeinflussen. Kürzere, beziehungsweise feinere Fasern führen zu kleineren Granulatpartikeldurchmessern. Durch den Einsatz feinerer Fasern lässt sich so durch eine festgelegte Granulatmenge noch mehr flüssige Substanz aufnehmen.

Eine weitere vorteilhafte Ausgestaltung des erfindungsgemäßen Granulats sieht ferner vor, dass die Granulatpartikel ein Bindemittel umfassen, wobei bevorzugt das Bindemittel bei einer Beladung der Granulatpartikel mit der flüssigen Substanz unlöslich in der flüssigen Substanz ist. Durch das Vorsehen eines Bindemittels im Granulat lässt sich dessen Stabilität verbessern. Es können alle gängigen Bindemittel eingesetzt werden, wobei der spätere Einsatzzweck des Granulats zu berücksichtigen ist. Soll das Granulat als Trägerstoff für flüssige Mischfutteradditive dienen, so sind Bindemittel einzusetzen, die gefahrlos von entsprechenden Tieren konsumiert werden können, und die bevorzugt nicht im Mischfutteradditiv lösbar sind. Beispielsweise können als Bindemittel verwendet werden: Polysaccharide wie Celluloseether, insbesondere in Form von CMC, HPMC, MC, Stärke, Agar, Alginat, Carrageen und dergleichen. Bevorzugt handelt es sich bei der flüssigen Substanz um eine ölige oder wasserfreie Substanz. Sollte ein in der flüssigen Substanz unlösliches Bindemittel verwendet werden, so können somit wasserlösliche Stoffe als Bindemittel verwendet werden. Das Verwenden eines in der flüssigen Substanz unlöslichen Bindemittels hat den Vorteil, dass die flüssige Substanz das Bindemittel nicht aus den Granulatpartikeln auswaschen kann. Somit ist gewährleistet, dass die Integrität der Granulatpartikel auch im beladenen Zustand bestehen bleibt.

Das Bindemittel bildet dabei ein stabiles Netzwerk mit dem cellolusehaltigen Fasern, wodurch sie in Form gehalten werden. Über die Wahl des Bindemittels und dessen Konzentration im Granulat lässt sich die Härte der Granulatpartikel einstellen. So kann die Härte der Granulatpartikel gezielt gesteigert werden, sodass das Granulat beim Transport und beim Verladen den aus der Gewichtskraft einer entsprechenden Granulatsäule resultierenden Drücken standhalten kann. Hierdurch wird verhindert, dass die Granulatpartikel aufgrund ihres Eigengewichts in einer Schüttung im unteren Bereich der Schüttung zerdrückt werden. Hierdurch kann wiederum verhindert werden, dass zerdrückte Partikel als Bodensatz in Form eines Breis auftreten und dort verkleben. Zudem wird verhindert, dass die flüssige Substanz, mit der die Granulatpartikel beladen sind, austritt.

Zum Erreichen der gewünschten Eigenschaften beträgt dabei bevorzugt der Bindemittelanteil an den Granulatpartikeln 2,0 bis 50,0 Gew.-%, bevorzugt 5,0 bis 45,0 Gew.-% und besonders bevorzugt 8,0 bis 40,0 Gew.-%.

Eine weitere vorteilhafte Ausgestaltung des erfindungsgemäßen Granulats sieht ferner vor, dass die Granulatpartikel zumindest einen Zusatzstoff umfassen, wobei der Gesamt-Zusatzstoffanteil an den Granulatpartikeln im Bereich zwischen 0,5 bis 20,0 Gew.-%, bevorzugt 2,0 bis 15,0 Gew.-% und besonders bevorzugt 3,0 bis 10,0 Gew.-% liegt.

Somit können die Granulatpartikel nicht nur zum Tragen der flüssigen Substanz dienen, sondern auch zur Aufnahme besagter Zusatzstoffe. Wird das erfindungsgemäße Granulat beispielsweise als Tierfutter verwendet, so können auch Feststoffe vom Granulat aufgenommen werden und den Tieren zugeführt werden. Es können solche Zusatzstoffe verwendet werden, die die Eigenschaften des Granulats weiter verbessern oder gezielt verändern. Beispielsweise kann Aktivkohle als Zusatzstoff beigemischt werden, was die Stabilität des Granulats sowie seine Affinität zu bestimmten Flüssigkeiten verbessert. Dabei kann der Zusatzstoff gemeinsam mit dem Bindemittel und/oder der flüssigen Substanz in die Hohlräume zwischen den cellulosehaltigen Fasern gezogen werden, beispielsweise wenn der Zusatzstoff im Bindemittel oder der flüssigen Substanz gelöst oder dispergiert ist. Der Zusatzstoff kann auch durch trockenes Vermengen mit den Granulatpartikeln in die Hohlräume gelangen, wenn der Zusatzstoff in Pulverform bzw. Partikelform vorliegt und der Partikeldurchmesser kleiner ist, als die Porengröße der Granulatpartikel. Auch kann der Zusatzstoff vor einer Herstellung der Granulatpartikel mit den cellulosehaltigen Fasern vermischt bzw. auf diese aufgetragen werden. Als weitere Zusatzstoffe kommen neben Aktivkohle auch Pflanzenkohle sowie Chitosan infrage. Aktiv- oder Pflanzenkohle kann hinzugefügt werden, um die Bildungskapazität zu erhöhen. Hierbei ist Aktivkohle zu bevorzugen da durch die feineren Partikel und größere Oberfläche am Ende des Prozesses kleinere und effektivere Agglomerate entstehen. Das Chitosan kann zugegeben werden, um Lösungen die geringe Mengen Wasser enthalten, wie zum Beispiel Rohglycerin, besser binden zu können, da das Chitosan das Wasser bindet.

Entsprechend einer weiteren vorteilhaften Ausgestaltung des erfindungsgemäßen Granulats ist es ferner vorgesehen, dass mindestens 90% der Korngrößenverteilung der Granulatpartikel unter 2000 µm liegt. Dies bedeutet, dass kaum oder sogar keine Granulatpartikel vorhanden sind, die eine Korngröße beziehungsweise eine Granulatpartikelgröße aufweisen, die 2000 µm beträgt oder sogar noch größer ist. Es können also Granulatpartikel vorhanden sein mit einer zwischen 0 und 2000 µm liegenden Partikelgröße. Besonders bevorzugt verteilt sich dabei die Korngrößenverteilung auf zwei oder mehr Fraktionen. Besonders bevorzugt ist eine erste Fraktion mit einer Korngrößenverteilung von 600 bis 1000 µm und eine zweite Fraktion von 1000 bis 2000 µm vorhanden. Die Partikelgrößenverteilung beziehungsweise Korngrößenverteilung kann insbesondere durch die Wahl der Ausgangsfasern gesteuert werden. Wie bereits erwähnt, führen kürzere und dünnere Fasern zu runderen und kleineren Granulatpartikeln, was entsprechend die Aufnahmekapazität für die flüssige Substanz und die Fließfähigkeit verbessert.

Beispielsweise kann es beim Einsatz einer Holzfaser mit einer maximalen Faserlänge im Gemisch von bis zu 400 µm nicht möglich sein, eine Fraktion an Granulatpartikeln mit einer Korngrößenverteilung von 600 bis 1000 µm herzustellen. Die Holzfasern können jedoch mittels Sieb auf eine Faserlänge im Bereich von unter 150 µm reduziert werden, wodurch es ermöglicht wird eine entsprechende Korngrößenverteilung der Granulatpartikel im Bereich von 600 bis 1000 µm herzustellen.

Ein Verfahren zur Herstellung des im vorigen beschriebenen erfindungsgemäßen Granulats sieht erfindungsgemäß vor, dass das Granulat durch Aufbauagglomeration basierend auf einer Nassgranulation von cellulosehaltigen Fasern mit zumindest Wasser und einem anschließend Trocknungsvorgang hergestellt wird. Durch das erfindungsgemäße Herstellverfahren erhält das erfindungsgemäße Granulat seine herausragenden physikalischen Eigenschaften. Wie bereits beschrieben, sind dies die vergleichsweise hohe Aufnahmekapazität für die flüssige Substanz bei gleichzeitiger Erhaltung der Fließfähigkeit bzw. Rieselfähigkeit. Das so erhaltene Granulat zeichnet sich durch eine vergleichsweise geringe Schüttdichte bei einer hohen spezifischen Oberfläche aus. Dies wird durch das Bilden eines feinen Fasernetzwerks in den resultierenden Granulatpartikeln erreicht, wobei die zwischen den Fasern gebildeten Hohlräume zu einer starken Kapillarwirkung führen.

Es sind andere Agglomerationsverfahren, wie beispielsweise Pressagglomeration bekannt. Die Pressagglomeration sieht das Erzeugen von Granulatpartikeln durch das Verpressen des Ausgangsmaterials vor. Diese Herstellungsmethode ist jedoch zur Herstellung des erfindungsgemäßen Granulats völlig ungeeignet, da hierdurch die cellulosehaltigen Fasern zu dicht gepackt werden. So können keine Hohlräume im Fasernetzwerk entstehen, sodass auch keine Kapillarwirkung bereitgestellt wird. Ein durch Pressagglomeration hergestelltes Granulat zeichnet sich somit durch eine verminderte Aufnahmekapazität für die flüssige Substanz sowie eine reduzierte Rieselfähigkeit aus. Erst durch die erfindungsgemäße Herstellung mittels Aufbauagglomeration lassen sich erfindungsgemäße Granulatpartikel herstellen.

Die Granulierung kann dabei in üblichen Misch- beziehungsweise Granulieraggregaten durchgeführt werden, die eine Aufbauagglomeration erlauben, sei es im kontinuierlichen Betrieb oder als Batch-Verfahren. Beispielsweise kann eine Herstellung in Tellern, Trommeln und Mischern erfolgen oder mittels Wirbelschichtgranulation. Sprühgranulation kann eingesetzt werden bei sehr feinen Ausgangsfasern, die in einer Bindemittellösung suspendiert wurden. Eine Trockengranulierung oder Extrusion hingegen kann zwar ebenfalls zur Herstellung ähnlicher Granulate verwendet werden, jedoch sind hierbei durch die hohe Verdichtung Einbußen in der maximalen Beladungskapazität zu erwarten

Die zum Granulieren verwendete Wassermenge beeinflusst dabei die Form der finalen Granulatpartikel. Je mehr Wasser hinzugegeben wird, desto enger werden die cellulosehaltigen Fasern während der Granulation gepackt, sodass besonders enge Hohlräume entstehen. Hierdurch kann die Aufnahmekapazität und Aufnahmegeschwindigkeit für die flüssige Substanz in Abhängigkeit des geplanten Einsatzzwecks eingestellt werden. Beispielsweise lässt sich so durch Erhöhen des Verhältnisses von Wasser zu Fasern das Schüttgewicht erhöhen, jedoch wird die maximale Ölbeladung reduziert.

Eine vorteilhafte Weiterbildung des erfindungsgemäßen Verfahrens sieht dabei vor, dass das nasse Granulat auf eine Restfeuchte von 1,0 bis 15,0 Gew.-%, bevorzugt 2,0 bis 12,0 Gew.-% und besonders bevorzugt 3,0 bis 10,0 Gew.-% getrocknet wird.

Eine weitere vorteilhafte Ausgestaltung des erfindungsgemäßen Verfahrens sieht ferner vor, dass dem nassen Granulat während der Aufbauagglomeration eine flüssige Substanz beigemischt wird oder das getrocknete Granulat nach dem Trocknen mit der flüssigen Substanz beladen wird. Der Aufbauagglomerationsvorgang kann ohne die Beimischung der flüssigen Substanz erfolgen. Das getrocknete Granulat kann dann verkauft werden, sodass der Kunde selbst den Beladungsvorgang mit der flüssigen Substanz vornehmen kann. Somit kann der Kunde das erfindungsgemäße Granulat für die verschiedensten Einsatzzwecke verwenden. Das Granulat kann jedoch auch während der Aufbauagglomeration mit der flüssigen Substanz beladen werden. Dies ist insbesondere vorteilhaft, wenn das Granulat als Zusatz für Futtermischungen verwendet werden soll. So kann das mit der flüssigen Substanz beladene Granulat direkt als Mischfutteradditiv verkauft werden.

Entsprechend einer weiteren vorteilhaften Ausgestaltung des erfindungsgemäßen Verfahrens wird dem nassen Granulat während der Aufbauagglomeration oder dem getrockneten Granulat nach dem Trocknen ein Bindemittel beigemischt, insbesondere ein in einer vom Granulat aufzunehmenden flüssigen Substanz unlösliches Bindemittel. Die Beimischung des Bindemittels zum Granulat kann also während der Aufbauagglomeration oder auch danach erfolgen.

Beispielsweise können zur Herstellung des Granulats cellulosehaltige Fasern mit Wasser, beziehungsweise mit einer Lösung oder Suspension des Bindemittels, nassgranuliert werden und in einem Folgeschritt auf die gewünschte Endfeuchte getrocknet werden.

Eine weitere vorteilhafte Ausgestaltung des erfindungsgemäßen Verfahrens sieht dabei ferner vor, dass das Granulat nach dem Trocknen zur Verteilung der Granulatpartikel auf wenigstens zwei Fraktionen gesiebt wird. Wie im vorigen bereits beschrieben, kann die Größe der Granulatpartikel innerhalb des Granulats variieren. Die Granulatpartikel können dann durch Sieben auf zwei oder mehr Fraktionen aufgeteilt werden. Somit lassen sich Granulate erzeugen, die sich durch eine vergleichsweise enge Korngrößenverteilung auszeichnen. Besonders bevorzugt können so Fraktionen mit einer Korngrößenverteilung von 600 bis 1000 µm und 1000 bis 2000 µm erzeugt werden.

Eine gattungsgemäße Futtermischung für Tiere, umfassend eine erste Fraktion an Futterpartikeln, weist erfindungsgemäß eine zweite Fraktion aus einem im vorigen beschriebenen Granulat auf. Das erfindungsgemäße mit der flüssigen Substanz in Form eines flüssigen Mischfutteradditivs beladene Granulat lässt sich somit als weiterer Bestandteil Futtermischungen beimengen. Bei den Futterpartikeln kann es sich um alle möglichen zur Ernährung von Tieren verwendeten Partikel handeln. Die Futterpartikel können beispielsweise in Form von Kugeln, Pellets, Körnern und dergleichen vorliegen. Das erfindungsgemäße Granulat lässt sich als zweite Fraktion einer solchen ersten Fraktion an Futterpartikeln beimischen. Dies erlaubt einen besonders flexiblen Einsatz des erfindungsgemäßen Granulats im Kontext der Tierernährung.

Aufgrund seiner hohen Aufnahmekapazität bei gleichzeitiger Wahrung der Fließfähigkeit bzw. Rieselfähigkeit lässt sich dabei die Futtermischung einfach handhaben, transportieren, dosieren und in die Futtermischung einarbeiten. Aufgrund der vergleichsweise hohen Druckstabilität des erfindungsgemäßen Granulats wird auch bei einer Beigabe in Futtermischungen zuverlässig das Zerstören der Granulatpartikel und das Austreten des flüssigen Mischfutteradditivs verhindert.

Besonders bevorzugt wird dabei die Größe der Granulatpartikel an die Partikelgröße der Futterpartikel angepasst, sodass sich die Granulatgröße und die Partikelgröße um maximal 100%, bevorzugt maximal 50% und besonders bevorzugt um maximal 30% unterscheiden. Mit anderen Worten sind die Granulatpartikel und die Futterpartikel somit annähernd gleich groß. Dies wirkt einer Separation der beiden Fraktionen in der Futtermischung entgegen. Die Partikelgröße typischer Futterpartikel liegt dabei ebenfalls in der Größenordnung von unter 2000 µm. Bei einer Korngrößenverteilung der Granulatpartikel im Bereich zwischen 600 bis 1000 µm beziehungsweise 1000 bis 2000 µm kommt es so zu einem besonders geringen Entmischungsrisiko der Granulatpartikel und der Futterpartikel.

Im Folgenden ist ein Ausführungsbeispiel zur Herstellung eines erfindungsgemäßen Granulats angegeben. So wird ein Holzfaserrohstoff als Ausgangsmaterial bereitgestellt. Der Holzfaserrohstoff wird mittels Plansichter auf eine Faserlänge von unter 400 µm abgesiebt. Die Fasern werden in einem Granulator vorgelegt und unter kontinuierlichem Mischen wird eine wässrige Lösung von Carboxymethylcellulose (CMC) mit einer Konzentration von 4% zugefügt. Die CMC-Qualität ist so zu wählen, dass die Lösung eine Viskosität im Bereich zwischen 100 bis 1700 mPas aufweist. Dabei erfolgt die Viskositätsbestimmung bevorzugt mittels eines Brookfield-Rotationsviskosimeters mit Spindel 2 bei 20 rpm und 30 s Messzeit. Das ideale Massenmischverhältnis besteht dabei aus zwei Teilen CMC-Lösung und einem Teil Holzfasern.

Nach vollständiger Zugabe der Lösung wird das Gemisch mit einer Drehzahl von 2000 bis 4000 rpm für drei Minuten granuliert.

Nach dem Granulieren werden die entstandenen Granulatpartikel bei 100 bis 130° C auf den gewünschten Feuchtegehalt getrocknet. Idealerweise beträgt dieser weniger als 10%.

Anschließend wird die gewünschte Partikelgrößenfraktion durch Siebung erzeugt. Die so hergestellten Granulatpartikel können eine Beladung von mindestens 100 bis 150% ihres Eigengewichts an Sonnenblumenöl aufnehmen, wobei dabei eine ausreichende Fließfähigkeit erhalten bleibt.

Weitere vorteilhafte Ausgestaltungen des erfindungsgemäßen Granulats sowie dessen Herstellungsverfahren ergeben sich auch aus den Ausführungsbeispielen, welche nachfolgend unter Bezugnahme auf die Figuren näher beschrieben werden.

Dabei zeigen:
- Figur 1: eine schematische Darstellung eines Granulatpartikels eines erfindungsgemäßen Granulats;
- Figur 2: eine schematische Detaildarstellung des Granulatpartikels;
- Figur 3: ein Ablaufdiagramm eines erfindungsgemäßen Verfahrens zur Herstellung des Granulats;
- Figur 4: eine schematische Darstellung eines Messverfahrens zur Bestimmung der Rieselfähigkeit des Granulats;
- Figur 5: ein Diagramm, zeigend die Aufnahmekapazität verschiedener Granulate für Sonnenblumenöl und die sich dabei einstellende Rieselfähigkeit;
- Figur 6: eine schematische Darstellung einer in einem Messverfahren zur Bestimmung der Schüttdichte des Granulats verwendbaren Vorrichtung.

Die vorliegende Erfindung widmet sich der Aufgabe ein Trägermaterial für flüssige Substanzen bereitzustellen, welches dazu in der Lage ist, eine ausreichende Menge dieser Flüssigkeit zu binden und dabei im beladenen Zustand frei fließfähig zu bleiben. Die flüssige Substanz soll idealerweise komplett im Verdauungstrakt eines Tieres nach Konsum des beladenen Trägermaterials freigebbar sein. Auch unter Druckbelastung und erhöhter Temperatur darf die flüssige Substanz nicht aus dem Trägermaterial austreten. Das Trägermaterial sollte dazu geeignet sein Futtermischungen beigemischt werden zu können, ohne dass es zu einer späteren Separation zwischen den Futtermittelbestandteilen kommt. Zudem müssen die Inhaltsstoffe des Trägermaterials für den Einsatz in Futtermitteln zugelassen sein. Das Trägermaterial soll sowohl im beladenen, als auch im unbeladenen Zustand transportierfähig, einfach zu dosieren und zu handhaben sowie in Mischfutter einzuarbeiten sein.

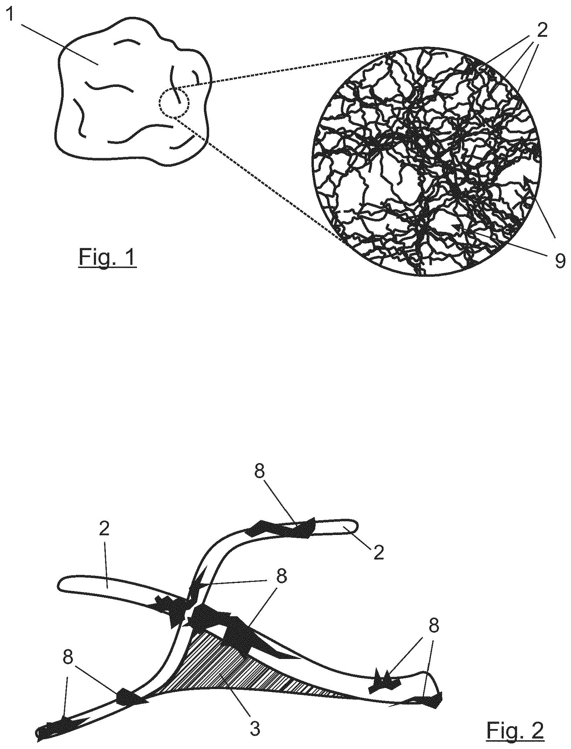

Figur 1 zeigt ein Granulatpartikel 1 eines erfindungsgemäßen Granulats, welches als besagtes Trägermaterial fungiert. Die Granulatpartikel 1 des Granulats umfassen cellulosehaltige Fasern 2, die durch Aufbauagglomeration zu besagten Granulatpartikeln 1 geformt sind. Dabei bilden die cellulosehaltigen Fasern 2 ein lockeres Netzwerk aus, sodass zwischen den cellulosehaltigen Fasern 2 Hohlräume 9 gebildet werden. Diese Hohlräume 9 sind so eng, dass sie als Kapillare wirken. Dies führt dazu, dass das Granulat aus den Granulatpartikeln 1 eine besonders hohe Aufnahmekapazität für eine in Figur 2 gezeigte flüssige Substanz 3 aufweist. Aufgrund der Porosität zeichnet sich das Granulat ferner durch eine vergleichsweise geringe Schüttdichte und eine hohe spezifische Oberfläche aus.

Figur 2 zeigt eine Detaildarstellung eines Ausschnitts des Granulatpartikels 1. Zu erkennen sind die cellulosehaltigen Fasern 2, beispielsweise in Form reiner Cellulosefasern oder Pflanzenfasern. Beispielsweise kann es sich bei den cellulosehaltigen Fasern 2 um Holzfasern handeln. Bevorzugt sind die cellulosehaltigen Fasern 2 über ein Bindemittel 8 miteinander verbunden. Dies verbessert die strukturelle Integrität und die Härte der Granulatpartikel 1. Figur 2 zeigt ebenfalls die von den Hohlräumen 9 aufgenommene flüssige Substanz 3.

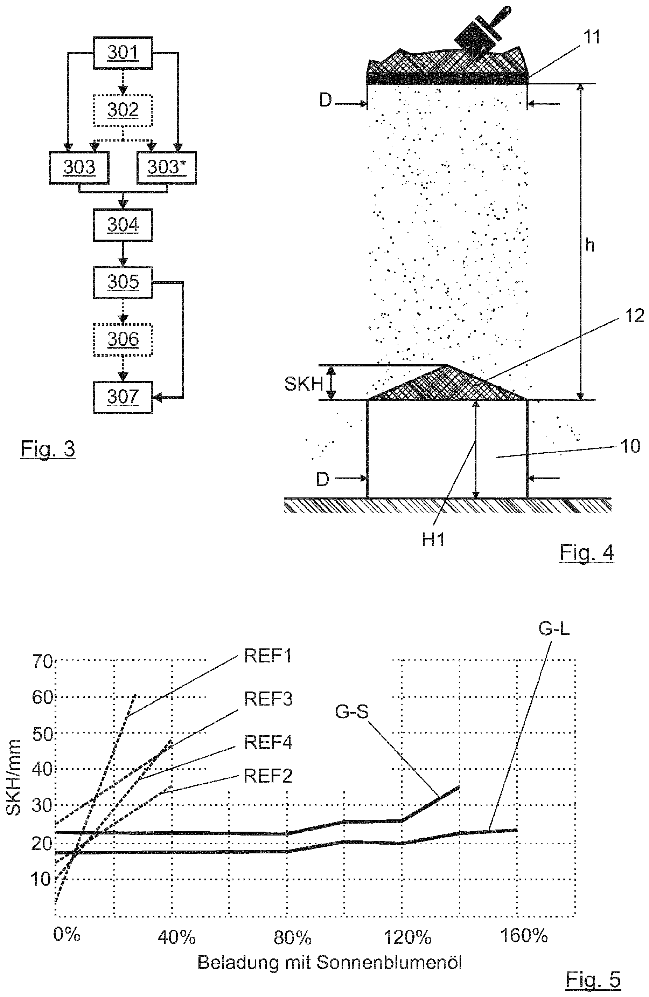

Figur 3 zeigt ein Ablaufdiagramm eines erfindungsgemäßen Verfahrens zur Herstellung des erfindungsgemäßen Granulats. In einem Schritt 301 wird ein faserförmiges Ausgangsmaterial bereitgestellt. Hierbei kann es sich um ein Pulver aus den cellulosehaltigen Fasern 2 handeln.

In einem optionalen Schritt 302 kann das faserförmige Ausgangsmaterial gesiebt werden. Hierzu können bewährte Siebmaschinen eingesetzt werden, wie beispielsweise Plansichter. Das in einer solchen Siebmaschine verwendete Sieb kann eine auf den jeweiligen Anwendungsfall geeignete Maschenweite aufweisen. Hierdurch lässt sich die Faserlänge der cellulosehaltigen Fasern 2 auf einen gewünschten Grad einschränken.

In einem sich daran anschließenden Schritt 303 werden die gegebenenfalls gesiebten Fasern mit Wasser vermischt. Je nach Einsatzzweck und Zusammensetzung des zu erzeugenden Granulats wird dabei ein fest vorgegebenes Mischungsverhältnis aus Fasern zu Wasser verwendet. Beispielsweise können zwei Massenanteile Wasser mit einem Teil Fasern vermischt werden, insbesondere bei einer Verwendung von Holzfasern als Ausgangsstoff. Werden Maisgranulate als Faserrohstoff für das erfindungsgemäße Granulat verwendet, sollte die verwendete Wassermenge idealerweise auf die ca. 1,7-fache Menge der Fasern bezogen auf das Gewicht eingestellt werden.

Wie der alternative Schritt 303* zeigt, können die Fasern anstelle mit Wasser auch mit einer Lösung beziehungsweise Suspension aus Wasser und dem Bindemittel 8 vermischt werden. Das Bindemittel 8 ist dabei bevorzugt unlöslich in der flüssigen Substanz 3.

Im sich daran anschließenden Schritt 304 werden nach vollständiger Zugabe der festgelegten Wassermenge, beziehungsweise Lösungs- oder Suspensionsmenge zu den Fasern, die Fasern und das Wasser, beziehungsweise die Lösung oder Suspension, für eine festgelegte Zeitdauer bei einer festgelegten Drehzahl gerührt. Hierbei handelt es sich um den eigentlichen Aufbauagglomerationsvorgang. Während des Rührens verklumpen die Fasern und bilden die Granulatpartikel 1. Durch die Aufbauagglomeration werden dabei die feinen Hohlräume 9 gebildet, sodass entsprechende Kapillarwirkungen zum Binden der flüssigen Substanz 3 entstehen.

Selbstverständlich ist es dabei auch alternativ möglich, den Rührvorgang bereits während der Zugabe der "Zutaten" in eine entsprechende Aufbauagglomerationsmaschine zu starten, sodass der Aufbauagglomerationsvorgang noch während der Zugabe der Fasern und Wasser (sowie optional des Bindemittels) startet. In diesem Falle werden die Schritte 303 und 304 bzw. 303* und 304 parallel ausgeführt (nicht dargestellt).

Im sich daran anschließenden Schritt 305 werden die so entstandenen Granulatpartikel 1 auf eine vorgegebene Restfeuchte getrocknet, vorzugsweise auf eine Restfeuchte von unter 10%.

Im sich daran anschließenden optionalen Schritt 306 können die Granulatpartikel 1 gesiebt werden, um mehrere Fraktionen mit einer jeweiligen gewünschten Korngrößenverteilung zu gewinnen. Diese Korngrößenverteilung orientiert sich bevorzugt an einer Partikelgröße von Futterpartikeln, denen die Granulatpartikel 1 zur Ausbildung einer erfindungsgemäßen Futtermischung beigemengt werden sollen. So sollen sich die Granulatpartikel 1 in ihrer Größe nur minimal von der Partikelgröße der Futterpartikel unterscheiden, um einer Entmischung entgegenzuwirken.

Das derartig hergestellte Granulat kann nun bereits an einen Kunden verkauft werden. Auch ist es denkbar die Beladung mit der flüssigen Substanz 3 selbst vorzunehmen, was in einem Schritt 307 erfolgen kann. Auch ist es denkbar die Beladung mit der flüssigen Substanz 3 während der Aufbauagglomeration, also während des Schritts 304, durchzuführen.

Es ist bereits bekannt Granulate, Pulver oder dergleichen, umfassend cellulosehaltige Fasern, als Trägermaterial für Flüssigkeiten wie Öle zu verwenden. An dieser Stelle wird beispielsweise auf Ölbindemittel verwiesen. Entsprechende Partikel zeichnen sich bereits durch eine vergleichsweise hohe Aufnahmefähigkeit für Öle aus. Jedoch verklumpen solche Stoffe oder bilden eine Art "Matsch", und sind entsprechend im beladenen Zustand nicht mehr frei fließfähig, beziehungsweise rieselfähig. Somit können entsprechend beladene Stoffe nicht mehr einfach gehandhabt werden und auch nicht dosiert werden. Mit Hilfe des erfindungsgemäßen Granulats ist dies jedoch möglich. So ist auch das mit der flüssigen Substanz 3 beladene Granulat weiterhin frei fließfähig beziehungsweise rieselfähig.

Zur Bewertung der Rieselfähigkeit dient dabei erfindungsgemäß die sogenannte Schüttkegelhöhe SKH, dessen Bestimmungsverfahren anhand von Figur 4 beschrieben wird. So wird ein Metallvollzylinder 10 bereitgestellt, über den in einem Abstand h von 150 mm ein Sieb 11 angeordnet wird. Das Sieb 11 sowie der Metallvollzylinder 10 weisen einen Durchmesser D von 60 mm auf. Die Höhe H1 des Metallvollzylinders 10 beträgt 55 mm. Die Maschenweite des Siebs 11 beträgt 3 mm. Wenn ein Ausgangsmaterial geprüft werden soll, dessen Partikelgröße größer als 3 mm ist, wird eine Maschenweite von 9 mm verwendet.

Das zu prüfende Material wird auf das Sieb 11 gegeben und mit Hilfe eine Pinsels langsam und möglichst gleichmäßig durch das Sieb 11 gerührt. Es wird so lange Material nachgerührt, bis sich auf dem Metallvollzylinder 10 ein geometrisch gleichmäßig geformter Schüttkegel 12 gebildet hat, welcher auch nach einer weiteren Materialzugabe sich in seiner Höhe nicht mehr verändert. Die Höhe dieses Schüttkegels 12 wird dann als Schüttkegelhöhe SKH in Millimetern gemessen. Das Ausgangsmaterial, beziehungsweise hier das Granulat, gilt dann als nicht als rieselfähig, wenn die Schüttkegelhöhe SKH größer als 35 mm ist.

Figur 5 zeigt ein Diagramm für verschiedene, mit Sonnenblumenöl als flüssige Substanz 3 beladene Granulate. Dabei ist die Beladung mit Sonnenblumenöl in Form einer Gewichtsprozentangabe bezogen auf das Eigengewicht des Granulats auf der Abszisse aufgetragen und die Schüttkegelhöhe SKH in Millimetern auf der Ordinate. Dargestellt ist der Verlauf der Schüttkegelhöhe SKH über die Beladung für ein erfindungsgemäßes Granulat G-L mit einer Korngrößenverteilung im Bereich von 1000 µm bis 2000 µm, dessen Korngrößenverteilung also in einem vergleichsweise hohen Bereich liegt, und einem erfindungsgemäßen Granulat G-S mit einer Korngrößenverteilung im Bereich von 600 µm bis 1000 µm sowie der Verlauf der Schüttkegelhöhe SKH für vier verschiedene Referenzgranulate REF1, REF2, REF3 und REF4. Bei dem ersten Referenzgranulat REF1 handelt es sich um Vivapur CS 800 S, bei dem zweiten Referenzgranulat REF2 handelt es sich um Arbocel G-300, bei dem dritten Referenzgranulat REF3 um Lignocel HBK 300/750 und bei dem vierten Referenzgranulat REF4 um Rehofix MK 1000. Die Referenzgranulate REF1 - REF4 stammen alle von der Firma J. Rettenmaier & Söhne GmbH + Co. KG.

Das Diagramm zeigt, das selbst mit einer stark zunehmenden Beladung mit der flüssigen Substanz 3 die Rieselfähigkeit für das erfindungsgemäße Granulat nur unmerklich zunimmt. Die Rieselfähigkeit bleibt dabei auch bei einer Beladung in der Höhe des Eigengewichts mit Sonnenblumenöl vorhanden.

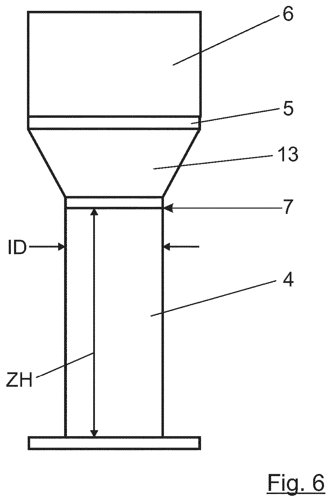

Das erfindungsgemäße Granulat zeichnet sich bevorzugt durch eine Schüttdichte von 120,0 bis 300,0 g/l, bevorzugt 140,0 bis 250,0 g/l und besonders bevorzugt von 160,0 bis 220,0 g/l aus. Figur 6 zeigt eine Vorrichtung, die zur Bestimmung dieser Schüttdichte verwendet werden kann. Das Vorgehen wird anhand von Figur 6 erläutert. So wird eine Messröhre 4 bereitgestellt, die ein Messvolumen von 100 cm³ aufweist. Die Messröhre 4 weist hierzu einen Innendurchmesser ID von 30 mm und eine Zylinderhöhe ZH von 141,5 mm auf. Auf die Messröhre 4 wird ein Trichter 6 aufgesetzt, welcher mit dem zu prüfenden Ausgangsmaterial befüllt wird. Die Unterseite des Trichters 6 wird mit einem Siebboden 5 verschlossen. Die Maschenweite des Siebbodens 5 beträgt 3 mm. Um das Auffangen der durch den Siebboden 5 durchgesiebten Partikel zu erleichtern kann optional ein Übergangsstück 13 zwischen dem Trichter 6 und der Messröhre 4 vorgesehen sein. Nun wird so lange das Ausgangsmaterial mit einem Pinsel durch den Siebboden 5 gerührt, bis die Messröhre 4 bis über den oberen Rand 7 hinaus befüllt ist. Dann werden der Siebboden 5, der Trichter 6 sowie gegebenenfalls das Übergangsstück 13 entfernt und das etwaige überstehende Material abgestriffen. Nun wird die Messröhre 4 gewogen. Die Messröhre 4 wurde zudem im leeren Zustand gewogen, sodass ihr Eigengewicht bekannt ist. Dieses Eigengewicht wird vom eigentlichen Messergebnis abgezogen, sodass sich die Masse des sich im Messvolumen der Messröhre 4 angesammelten Ausgangsmaterials ergibt. Dieses Ergebnis kann mit einem geeigneten Faktor multipliziert werden, um das Ergebnis in Gramm pro Liter zu erhalten. Wird das Waagergebnis beispielsweise in Gramm angegeben, so kann das Ergebnis mit einem Faktor von 10 multipliziert werden, um die Schüttdichte im Gramm pro Liter zu erhalten. Der Anhand von Figur 6 beschriebene Ablauf ist dabei angelehnt an DIN EN ISO 60.

## Patentansprüche

1. Granulat, dessen Granulatpartikel (1) cellulosehaltige Fasern (2) umfassen, wobei
die Granulatpartikel (1) dazu in der Lage sind, zumindest ihr Eigengewicht an einer flüssigen Substanz (3) bei gleichzeitiger Bewahrung der Rieselfähigkeit aufzunehmen,
**dadurch gekennzeichnet, dass**
die Granulatpartikel (1) bis zu einer Schüttkegelhöhe (SKH) von 35,0 mm rieselfähig sind, wobei die Schüttkegelhöhe (SKH) durch folgendes Messverfahren bestimmt ist:
- Zentrales Anordnen eines Siebs (11) mit einem Durchmesser (D) von 60 mm mit einem Abstand (h) von 150 mm über einem Metallvollzylinder (10) mit einem Durchmesser (D) von 60 mm und einer Höhe (H1) von 55 mm, wobei die Maschenweite des Siebbodens 3 mm für ein zu prüfendes Ausgangsmaterial mit einer Partikelgröße von unter 3 mm ist und die Maschenweite 9 mm ist, wenn die Partikelgröße größer als 3 mm ist;
- Geben des Granulats auf das Sieb (11) und Durchrühren des Granulats durch das Sieb (11) mit einem Pinsel, solange bis sich auf dem Metallvollzylinder (10) ein geometrisch gleichmäßig geformter Schüttkegel (12) gebildet hat, welcher sich auch nach weiterer Materialzugabe nicht mehr in seiner Höhe verändert; und
- Messen der Höhe des Schüttkegels (12).

2. Granulat nach Anspruch 1,
**gekennzeichnet durch**
eine Schüttdichte von 120,0 bis 300,0 g/l, bevorzugt 140,0 bis 250,0 g/l und besonders bevorzugt von 160,0 bis 220,0 g/l, wobei die Schüttdichte insbesondere nach folgendem Messverfahren bestimmt ist:
- Bereitstellen einer zylindrischen Messröhre (4) mit einem Innendurchmesser (ID) von 30,0 mm und einer Zylinderhöhe (ZH) von 141,5 mm;
- Aufsetzen eines Siebbodens (5) mit einer Maschenweite von 3,0 mm auf die Messröhre (4);
- Aufsetzen eines Trichters (6) auf den Siebboden (5) und Befüllen des Trichters (6) mit dem Granulat;
- Durchstreichen des Granulats durch den Siebboden (5) so lange, bis die Messröhre (4) bis obenhin gefüllt ist;
- Abnehmen des Trichters (6) und des Siebbodens (5) und Abstreifen etwaigen überstehenden Granulats vom oberen Rand (7) der Messröhre (4); und
- Wiegen der befüllten Messröhre (4) und Abziehen des Eigengewichts der Messröhre (4) vom Ergebnis.

3. Granulat nach Anspruch 1 oder 2,
**dadurch gekennzeichnet, dass**
die Granulatpartikel (1) eine spezifische Oberfläche von 0,5 bis 1,0 m²/g aufweisen, bevorzugt 0,6 bis 0,8 m²/g, wobei die spezifische Oberfläche insbesondere mittels Gasadsorption mit folgendem Messgerät bestimmt ist: Gasadsorptionsmessgeräts BET - NOVA 2000e der Firma Quantachrome Instruments, Inc.

4. Granulat nach einem der Ansprüche 1 bis 3,
**dadurch gekennzeichnet, dass**
die Granulatpartikel (1) mit wenigstens einer flüssigen Substanz (3) beladen sind.

5. Granulat nach Anspruch 4,
**dadurch gekennzeichnet, dass**
die flüssige Substanz (3) einen auf das Gewicht der Substanz (3) bezogenen Wasseranteil von weniger als 15,0% aufweist.

6. Granulat nach Anspruch 4 oder 5,
**dadurch gekennzeichnet, dass**
die flüssige Substanz (3) durch ein flüssiges Mischfutteradditiv ausgebildet ist, insbesondere in Form von: Ölen, Säuren, Fettsäuren, Vitaminen, Aminosäuren oder Alkoholen.

7. Granulat nach einem der Ansprüche 1 bis 6,
**dadurch gekennzeichnet, dass**
die cellulosehaltigen Fasern (2) eine durchschnittliche Faserlänge zwischen 30 µm bis 3,0 mm aufweisen, bevorzugt zwischen 30 µm und 400 µm, besonders bevorzugt zwischen 30 µm und 150 µm.

8. Granulat nach einem der Ansprüche 1 bis 7,
**dadurch gekennzeichnet, dass**
die Granulatpartikel (1) ferner ein Bindemittel (8) umfassen, wobei bevorzugt das Bindemittel (8) bei einer Beladung der Granulatpartikel (1) mit der flüssigen Substanz (3) unlöslich in der flüssigen Substanz (3) ist.

9. Granulat nach Anspruch 8.
**gekennzeichnet durch**
einen Bindemittelanteil an den Granulatpartikeln (1) im Bereich zwischen 2,0 bis 50,0 Gew.-%, bevorzugt 5,0 bis 45,0 Gew.-% und besonders bevorzugt 8,0 bis 40,0 Gew.-%.

10. Granulat nach einem der Ansprüche 1 bis 9,
**dadurch gekennzeichnet, dass**
die Granulatpartikel (1) ferner zumindest einen Zusatzstoff umfassen, wobei der Gesamt-Zusatzstoffanteil an den Granulatpartikeln (1) im Bereich zwischen 0,5 bis 20,0 Gew.-%, bevorzugt 2,0 bis 15,0 Gew.-% und besonders bevorzugt 3,0 bis 10,0 Gew.-% liegt.

11. Granulat nach einem der Ansprüche 1 bis 10,
**dadurch gekennzeichnet, dass**
mindestens 90% der Korngrößenverteilung der Granulatpartikel (1) unter 2000 µm liegt.

12. Verfahren zur Herstellung eines Granulats nach einem der Ansprüche 1 bis 11,
**dadurch gekennzeichnet, dass**
das Granulat durch Aufbauagglomeration basierend auf einer Nassgranulation von cellulosehaltigen Fasern (2) mit zumindest Wasser und einem anschließend Trocknungsvorgang hergestellt wird.

13. Verfahren nach Anspruch 12,
**dadurch gekennzeichnet, dass**
das nasse Granulat auf eine Restfeuchte von 1,0 bis 15,0 Gew.-%, bevorzugt 2,0 bis 12,0 Gew.-% und besonders bevorzugt 3,0 bis 10,0 Gew.-% getrocknet wird.

14. Verfahren nach Anspruch 12 oder 13,
**dadurch gekennzeichnet, dass**
dem nassen Granulat während der Aufbauagglomeration eine flüssige Substanz (3) beigemischt wird oder das getrocknete Granulat nach dem Trocknen mit der flüssigen Substanz (3) beladen wird.

15. Verfahren nach einem der Ansprüche 12 bis 14,
**dadurch gekennzeichnet, dass**
dem nassen Granulat während der Aufbauagglomeration oder dem getrockneten Granulat nach dem Trocknen ein Bindemittel (8) beigemischt wird, insbesondere ein in einer vom Granulat aufzunehmenden flüssigen Substanz (3) unlösliches Bindemittel (8).

16. Verfahren nach einem der Ansprüche 12 bis 15,
**dadurch gekennzeichnet, dass**
das Granulat nach dem Trocknen zur Verteilung der Granulatpartikel (1) auf wenigstens zwei Fraktionen gesiebt wird.

17. Futtermischung für Tiere, umfassend eine erste Fraktion an Futterpartikeln, **gekennzeichnet durch**
eine zweite Fraktion aus einem Granulat nach einem der Ansprüche 4 bis 11.

18. Futtermischung nach Anspruch 17,
**dadurch gekennzeichnet, dass**
die Größe der Granulatpartikel (1) an die Partikelgröße der Futterpartikel angepasst ist, sodass sich die Granulatgröße und die Partikelgröße um maximal 100%, bevorzugt maximal 50% und besonders bevorzugt um maximal 30% unterscheiden.
